(19) Europäisches Patentamt
European Patent Office
Office européen des brevets

(11) **EP 4 732 670 A1**

(12) **EUROPEAN PATENT APPLICATION**
published in accordance with Art. 153(4) EPC

(43) Date of publication:
**29.04.2026 Bulletin 2026/18**

(21) Application number: **24831904.8**

(22) Date of filing: **24.06.2024**

(51) International Patent Classification (IPC):
**A01N 25/00** (2006.01)    **A01C 1/06** (2006.01)
**A01N 25/10** (2006.01)    **C08F 8/12** (2006.01)
**C08F 16/06** (2006.01)

(52) Cooperative Patent Classification (CPC):
**A01C 1/06; A01N 25/00; A01N 25/10; C08F 8/12;
C08F 16/06**

(86) International application number:
**PCT/JP2024/022817**

(87) International publication number:
**WO 2025/005043 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.06.2023 JP 2023104010**

(71) Applicant: **Kuraray Co., Ltd.
Kurashiki-shi, Okayama 710-0801 (JP)**

(72) Inventors:
• **SEKI, Michinari
Kurashiki-shi, Okayama 713-8550 (JP)**
• **IMAOKA, Yoriko
Kurashiki-shi, Okayama 713-8550 (JP)**
• **MORIKAWA, Keisuke
Kurashiki-shi, Okayama 713-8550 (JP)**

(74) Representative: **Müller-Boré & Partner
Patentanwälte PartG mbB
Friedenheimer Brücke 21
80639 München (DE)**

(54) **SEED COATING MATERIAL AND COATED SEED**

(57) Provided are: seed coating material that is biodegradable, generates a low amount of dust, and is superior in coatability to seeds; and a coated seed being coated with the seed coating material. A seed coating material comprising: a vinyl alcohol polymer; and optionally sodium acetate, wherein a proportion of a total content of a methanol-soluble content of the vinyl alcohol polymer and the sodium acetate, with respect to a total content of the vinyl alcohol polymer and the sodium acetate, is 2% by mass or more and 20% by mass or less.

[FIG. 1]

EP 4 732 670 A1

**Description**

[TECHNICAL FIELD]

The present invention relates to a seed coating material comprising a vinyl alcohol polymer, and a coated seed obtained by using the same.

[BACKGROUND ART]

Seed coating materials are widely used for coating seeds to increase the probability that the seeds grow into crops. Pesticides are often added to such seed coating materials in order to prevent the seeds from being invaded by saprophytic fungi or insects before germination. However, conventionally, seed coating materials containing pesticides coated on seeds often peel off, leading to a problem of adverse effects on workers and/or organisms in the surrounding environment by being dispersed into the environment. In order to reduce the peeling of pesticides from seeds, binders mainly composed of a polyacrylic acid ester, etc., being highly adhesive to the seed surface (Patent Document 1), and glossy coating materials for seeds containing luminous material, talc, polyvinyl alcohol, an ethylene-vinyl acetate copolymer, and an aqueous medium (Patent Document 2), etc., are known. However, these documents do not disclose a seed coating material that is biodegradable and is less likely to peel from the seeds.

[PRIOR ART DOCUMENTS]

[Patent Documents]

Patent Document 1: PCT International Publication No. 2013/166020
Patent Document 2: PCT International Publication No. 2019/176272

[SUMMARY OF THE INVENTION]

[Problems to be Solved by the Invention]

An object of the present invention is to provide: a seed coating material that is biodegradable, generates a low amount of dust, and is superior in coatability to seeds; and a coated seed being coated with the seed coating material.

[Means for Solving the Problems]

The above-described objects are achieved by providing any one of the followings.

(1) A seed coating material comprising: a vinyl alcohol polymer; and optionally sodium acetate, wherein a proportion of a total content of a methanol-soluble content of the vinyl alcohol polymer and the sodium acetate, with respect to a total content of the vinyl alcohol polymer and the sodium acetate, is 2% by mass or more and 20% by mass or less;
(2) The seed coating material according (1), wherein in the vinyl alcohol polymer, a proportion of the methanol-soluble content of the vinyl alcohol polymer is 4% by mass or more and 10% by mass or less;
(3) The seed coating material according to (1) or (2), wherein a degree of saponification of the vinyl alcohol polymer is 70.0 mol% or more and 86.0 mol% or less;
(4) The seed coating material according to any one of (1) to (3), further comprising inorganic fine particles;
(5) The seed coating material according to (4), wherein the inorganic fine particles are at least one selected from the group consisting of talc, mica, diatomaceous earth, limestone, gypsum, bentonite, vermiculite, zeolite, silica sand, and barium sulfate;
(6) The seed coating material according to (5) comprising talc as the inorganic fine particles;
(7) The seed coating material according to any one of (4) to (6), wherein a mass ratio of the inorganic fine particles to the vinyl alcohol polymer is 0.5:1.0 to 5.0:1.0;
(8) A coated seed, wherein at least a part of a surface of the seed is coated with the seed coating material according to any one of (1) to (7);
(9) The coated seed according to (8), wherein the seed is at least one selected from the group consisting of maize, wheat, and soybean.

[Effects of the Invention]

The seed coating material of the present invention is biodegradable, generates a low amount of dust, and is superior in coatability to seeds.

[BRIEF DESCRIPTION OF THE DRAWINGS]

[FIG. 1]FIG. 1 is a photograph of coated seeds of Example 2.
[FIG. 2]FIG. 2 is a photograph of coated seeds of Comparative Example 3.

[DESCRIPTION OF EMBODIMENTS]

Hereinafter, embodiments of the present invention are described.
It is to be noted that in the present description, numerical value ranges described using "to" mean that numerical values before and after "to" are included.

Seed Coating Material

The seed coating material of the present invention comprises: a vinyl alcohol polymer (hereinafter, may be referred to as "PVA"); and optionally sodium acetate, wherein a proportion of a total content of a methanol-soluble content of the PVA and the sodium acetate, with respect to a total content of the PVA and the sodium acetate, is 2% by mass or more and 20% by mass or less.

The PVA comprised in the seed coating material of the present invention is polymer having a vinyl alcohol unit as a structural unit. The lower limit of the proportion of the vinyl alcohol unit with respect to total structural units in the PVA is, for example, preferably 10 mol%, more preferably 20 mol%, still more preferably 30 mol%, and may be even more preferably 40 mol%. On the other hand, the upper limit of the proportion of the vinyl alcohol unit is, for example, preferably 90 mol%, more preferably 80 mol%, and may be still more preferably 60 mol%. The PVA may be one obtained by, for example, polymerizing a vinyl ester monomer, and saponifying a resulting vinyl ester-based polymer. The PVA can comprise, in addition to the vinyl alcohol unit, for example, a vinyl ester unit.

The "methanol-soluble content of the PVA" (hereinafter, may be also merely referred to as "methanol-soluble content)" as referred to herein means the PVA component that is soluble in methanol, of the PVA, and specifically, is a PVA component that is dissolved in a washing liquid when the PVA is washed with methanol by using a Soxhlet extractor for 8 hrs. It is to be noted that the amount of methanol is set to 100 mL with respect to 10 g of the PVA. Furthermore, the washing by using a Soxhlet extractor is performed in a hot water bath at about 95 °C. Such a methanol-soluble content may include the PVA having a low degree of polymerization and/or the PVA having a low degree of saponification. The lower limit of the proportion of the methanol-soluble content in the PVA is preferably 4% by mass, more preferably 6% by mass, and still more preferably 7% by mass. Further, the upper limit of the proportion of the methanol-soluble content in the PVA is preferably 10% by mass, more preferably 9% by mass, and still more preferably 8% by mass. When the proportion of the methanol-soluble content falls within the above range, the adhesive force of the of the seed coating material to seed surfaces may be more superior. This feature is considered to result from adsorption of the methanol-soluble content of the PVA, which is a hydrophobic component to the seed surfaces, which are hydrophobic seed surfaces, whereby the adhesive force between the PVA and the seed surfaces is improved.

The lower limit of the degree of saponification of the PVA is preferably 70.0 mol%, and more preferably 72.0 mol%. Furthermore, the upper limit of the degree of saponification of the PVA is preferably 20 mol%, more preferably 80.0 mol%, and still more preferably 75.0 mol%. When the degree of saponification of the PVA falls within the above range, the adhesiveness (coatability) to the seed surface may be more superior. The degree of saponification of the PVA is measured by the method described in JIS K6726: 1994.

The lower limit of the viscosity-average degree of polymerization of the PVA is preferably 100, more preferably 200, still more preferably 300, and even more preferably 400. Furthermore, the upper limit of the viscosity-average degree of polymerization of the PVA is preferably 3,500, more preferably 2,000, still more preferably 1,500, and even more preferably 1,000. When the viscosity-average degree of polymerization of the PVA falls within the above range, the adhesiveness (coatability) to the seed surface may be more superior. The viscosity-average degree of polymerization of the PVA is measured n accordance with JIS K6726: 1994.

The PVA can be produced by, for example, saponifying a vinyl ester-based polymer obtained by polymerizing a vinyl ester monomer. Examples of the vinyl ester monomer include vinyl formate, vinyl acetate, vinyl propionate, vinyl valerate, vinyl caprate, vinyl laurate, vinyl stearate, vinyl benzoate, vinyl butyrate, vinyl isobutyrate, vinyl pivalate, vinyl versatate, vinyl caprate, vinyl caprylate, vinyl caprate, vinyl laurate, vinyl palmitate, vinyl stearate, vinyl oleate, and the like. Among these, in light of favorable availability and economy, vinyl acetate is preferred. Only one type of the vinyl ester monomer may be used, or two or more types of thereof may be used in combination.

The PVA may be a modified PVA into which a unit other than a unit derived from a vinyl ester monomer, or a functional group is introduced by using a procedure such as copolymerization, acetalization, or esterification.

In a case in which the PVA is a copolymer-modified PVA, the copolymer-modified PVA can be obtained by, for example, saponifying a vinyl ester-based copolymer obtained by copolymerizing a vinyl ester monomer and a monomer other than the vinyl ester monomer. Any monomer other than the vinyl ester monomer to be copolymerized with the vinyl ester monomer can be used within a range not leading to impairment of the effects of the present invention, as long as it is copolymerizable with a vinyl ester monomer, and examples of such a monomer include: $\alpha$-olefins such as ethylene, propylene, 1-butene, isobutene, pentene, 1-hexene, 1-octene, 1-dodecene, 1-hexadecene, and 1-octadecene; methacrylic acid; (meth)acrylic acid esters such as methyl (meth)acrylate, ethyl (meth)acrylate, n-propyl (meth)acrylate, isopropyl (meth)acrylate, n-butyl (meth)acrylate, 2-ethylhexyl (meth)acrylate, cyclohexyl (meth)acrylate, stearyl (meth) acrylate, and octadecyl (meth)acrylate; acrylamide derivatives such as N-methylacrylamide and N-ethylacrylamide; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, n-butyl vinyl ether, lauryl vinyl ether, and vinyl stearate ether; allyl acetate; allyl ethers such as propyl allyl ether, butyl allyl ether, and hexyl allyl ether; monomers having an oxyalkylene group; isopropenyl acetate; monomers having a silyl group such as vinylmethyldimethoxysilane, vinyldimethylmethoxysilane, vinyltriethoxysilane, vinylmethyldiethoxysilane, vinyldimethylethoxysilane, 3-(meth)acrylamidepropyltrimethoxysilane, and 3-(meth)acrylamidepropyltriethoxysilane; and the like. These may be used alone of one type or in combination of two or more types thereof.

In a case in which the PVA is a modified PVA into which a modifying group is introduced by acetalization, a modifying agent for use in introducing the modifying group by acetalization is not particularly limited, as long as it does not lead to impairment of the effects of the present invention. The modifying agent is exemplified by linear, branched, cyclic saturated, cyclic unsaturated, or aromatic aldehydes having 1 to 19 carbon atoms, aldoses, and the like. Specific examples include formaldehyde, acetaldehyde, propionyl aldehyde, n-butyraldehyde, isobutyraldehyde, tert-butyraldehyde, benzaldehyde, cyclohexyl aldehyde, pentanal, hexanal, heptanal, octanal, nonanal, decanal, dodecanal, tetradecanal, hexadecanal, octadecanal, and the like. Further, the modifying agent may be one in which, for example, one or more hydrogen atoms are substituted with a halogen or the like. The modifying agent may be used alone, or two or more types thereof may be used in combination.

In a case in which the PVA is a modified PVA into which a modifying group is introduced by esterification, a modifying agent for use in introducing the modifying group by esterification is not particularly limited. The modifying agent is exemplified by carboxylic acid derivatives such as linear, branched, cyclic saturated, cyclic unsaturated, or aromatic carboxylic acids having 1 to 19 carbon atoms, carboxylic acid halides, vinyl esters, and fatty acids. Specific examples include acetic acid, propionic acid, butyric acid, valeric acid, caproic acid, enanthic acid, caprylic acid, pelargonic acid, capric acid, lauric acid, myristic acid, palmitic acid, margaric acid, stearic acid, or acid chlorides thereof, and the like. Further, the modifying agent may be one in which, for example, one or more hydrogen atoms are substituted with a halogen or the like. The modifying agent may be used alone, or two or more types thereof may be used in combination.

In the production of the PVA, for example, a bulk polymerization procedure, a solution polymerization procedure, a suspension polymerization procedure, an emulsion polymerization procedure, a dispersion polymerization procedure, or the like may be employed as a procedure for obtaining the vinyl ester-based polymer from the vinyl ester monomer. Among these, a solution polymerization procedure is industrially preferred.

In the preparation of the vinyl ester-based polymer, a polymerization initiator may be used. The polymerization initiator may be selected from well-known initiators, according to the polymerization procedure. Specific examples include: azo-based initiators such as 2,2'-azobisisobutyronitrile, 2,2'-azobis(2,4-dimethylvaleronitrile), 2,2'-azobis(4-methoxy-2,4-dimethylvaleronitrile); percarbonate compounds such as diisopropyl peroxydicarbonate, di-2-ethylhexyl peroxydicarbonate, and diethoxyethylperoxydicarbonate; perester compounds such as t-butylperoxyneodecanate, $\alpha$-cumyl-peroxyneodecanate, and t-butylperoxydecanate; acetyl cyclohexylsulfonyl peroxide; peroxide-based initiators such as 2,4,4-trimethylpentyl-2-peroxyphenoxyacetate, and the like.

The amount of the polymerization initiator may be appropriately determined depending on the type of monomer and initiator used, the degree of polymerization intended, and the like, and is preferably 0.20 to 0.33% by mass with respect to the total mass of the vinyl ester monomer.

In the preparation of the vinyl ester-based polymer, a chain transfer agent may be used. The chain transfer agent may be selected from well-known chain transfer agents, according to the polymerization procedure. Specific examples include: aldehydes such as acetaldehyde and propionaldehyde; ketones such as acetone and methyl ethyl ketone; halogenated hydrocarbons such as trichloroethylene and perchloroethylene; phosphinic acid salts such as sodium phosphinate monohydrate; and the like. Of these, aldehydes and ketones may be suitably used. The amount of the chain transfer agent can be determined to the intended degree of polymerization of the vinyl ester-based polymer depending on the chain transfer constant of the added chain transfer agent, within a range not leading to impairment of the effects of the invention. Furthermore, a functional group may be introduced using such an agent; an aliphatic hydrocarbon group may be introduced at the terminal by using a chain transfer agent having an alkyl group, or an ionic functional group may be introduced at the terminal by using a chain transfer agent having a carboxy group.

Polymerization conditions, etc., may be appropriately determined depending on the type and amount of the monomer used, desired physical properties, the polymerization procedure adopted, and the like. For example, the polymerization temperature is typically 0 to 150 °C, and preferably 20 to 120 °C.

The conversion (rate of polymerization) in the vinyl ester-based polymer may be, for example, 20 to 95%. In light of improvement of the yield, control of the degree of polymerization, and the like, the conversion is preferably 30% or more, and more preferably 40% or more.

For the saponification reaction of the vinyl ester-based polymer obtained, alcoholysis or hydrolysis reaction may be applied, in which a conventionally well-known basic catalyst such as sodium hydroxide, potassium hydroxide, or sodium methoxide, or acidic catalyst such as p-toluenesulfonic acid is used. Examples of the solvent for use in the saponification reaction include: alcohols such as methanol and ethanol; esters such as methyl acetate and ethyl acetate; ketones such as acetone, methyl ethyl ketone; aromatic hydrocarbons such as benzene and toluene; and the like. These may be used alone of one type, or in combination of two or more types thereof. Among these, in a preferred method as the saponification reaction, methanol or a mixed solution of methanol and methyl acetate is used as the solvent, and the saponification reaction is carried out in the presence of sodium hydroxide, which is a basic catalyst.

The amount of the catalyst for use in the saponification reaction may be appropriately predetermined depending on the type of catalyst used, the intended degree of saponification, and the like. For example, when sodium hydroxide is used as the catalyst for the saponification reaction, in one embodiment of the present invention, a rate (molar ratio) of the catalyst to the vinyl ester monomer in the vinyl ester-based copolymer is preferably 0.0015 to 0.0095.

A PVA resin actually manufactured and obtained may contain components other than PVA, such as residues of compounds used in the manufacturing process and components generated by a side reaction, etc. Hereinafter, the manufactured PVA resin, which include such components other than PVA, may be referred to as "PVA resin". For example, the PVA resin may contain sodium acetate in addition to the PVA.

As described above, the seed coating material of the present invention may comprise sodium acetate. The proportion of the total content of the methanol-soluble content of the PVA and sodium acetate with respect to the total content of the PVA and sodium acetate in the seed coating material is 2 mass% or more and 20 mass% or less. The lower limit of the proportion is preferably 4% by mass, more preferably 5% by mass, still more preferably 6% by mass, and even more preferably 7% by mass. The upper limit of the proportion is preferably 15% by mass, more preferably 12% by mass, still more preferably 10% by mass, and even more preferably 9% by mass. When the proportion of the total content of the methanol-soluble content of the PVA and sodium acetate with respect to the total content of the PVA and sodium acetate falls within the above range, the adhesiveness of the seed coating material to the seed surface may increase, with a low amount of fine powder generated, thereby leading to superior coatability to seed.

It is preferred that the seed coating material comprises sodium acetate. Due to the presence of sodium acetate in the seed coating material, crystallinity of the PVA decreases, thereby resulting in a more superior coating film formed from the seed coating material, which is neither too rigid nor too soft. The lower limit of the proportion of the content of sodium acetate with respect to the total content of the PVA and sodium acetate in the seed coating material is preferably 0.1% by mass, more preferably 0.5% by mass, and still more preferably 0.8% by mass. Furthermore, the upper limit of the proportion of the content of sodium acetate with respect to the total content of the PVA and sodium acetate in the seed coating material is preferably 10% by mass, more preferably 5% by mass, still more preferably 3% by mass, and even more preferably 1% by mass.

The proportion of the total content of the methanol-soluble content of the PVA and sodium acetate with respect to the total content of the PVA and sodium acetate in the seed coating material can be determined from a mass of the PVA, the methanol-soluble content of the PVA, and sodium acetate comprised in the seed coating material. Hereinafter, in the present specification, the proportion of the total content of the methanol-soluble content of the PVA and sodium acetate with respect to the total content of the PVA and sodium acetate may be denoted by a symbol "X" attached thereto, and for example, may be referred to as the "proportion X of the total content of the methanol-soluble content and sodium acetate", the "proportion X", merely "X", or the like.

In the seed coating material, the methanol-soluble content and/or sodium acetate may be component(s) derived from the PVA resin, which is a raw material of the seed coating material, or may be component(s) separately added from the PVA resin during the manufacture of the seed coating material.

The mass of each of the PVA, the methanol-soluble content of the PVA, and sodium acetate comprised in the seed coating material may be measured by an appropriate method, depending on the formulation of the seed coating material. For example, in one embodiment, when the seed coating material comprises, as a raw material, the PVA resin comprising the PVA and sodium acetate, there may be a case in which each of the components, i.e., the PVA, the methanol-soluble content of the PVA, and sodium acetate comprised in the seed coating material is derived from only the PVA resin that is the raw material. Alternatively, there may be a case in which the PVA resin substantially consists of only the PVA (including the methanol-soluble content of the PVA) and sodium acetate. In such a case, the proportion X in the seed coating material is equal to the proportion X of the PVA resin which is the raw material, and in this case, the proportion X can be measured by the following method. More specifically, 10 g of the PVA resin is weighed onto a cylindrical filter paper, and the weighed PVA resin is washed for 8 hrs by using a Soxhlet extractor with methanol as the washing solvent. It s to be noted that the amount of methanol is set to 100 mL with respect to 10 g of the PVA resin. Further, the washing by using the Soxhlet extractor is carried out in a hot water bath at about 95 °C. The washing liquid after the washing treatment is collected, methanol is dried to remove from the washing liquid thus obtained, and the proportion X is calculated according to the following equation using the mass of the resultant residue. In the case of this embodiment, the proportion X of the PVA resin calculated by this method accounts for the proportion X of the seed coating material.

$$X \ (\% \ \text{by mass}) = ([\text{mass of residue (g)}]/ \ [10 \ (g)]) \times 100$$

It is to be noted that, in the case in which the seed coating material comprises the other component(s) aside from the PVA (including the methanol-soluble content of the PVA) and sodium acetate, the proportion X can be determined by performing the above measurement after removing the other component(s), for example, by a well-known method.

In an exemplary method for adjusting the proportion X of the seed coating material, the amount of the methanol-soluble content of the PVA and/or sodium acetate added to the seed coating material may be adjusted. Alternatively, the proportion X of the seed coating material may be adjusted by adjusting the proportion X of the PVA resin which is the raw material of the seed coating material. Exemplary procedures for adjusting the proportion X of the PVA resin may involve adjusting: polymerization and/or saponification conditions in the step of producing the PVA resin; and/or washing conditions of the PVA resin after the saponification, i.e., the type of the washing solvent, the time period, the temperature, the number of times of the washing, and the like.

The solvent for use in washing the PVA resin obtained after the saponification reaction may be methyl acetate, or may be a mixed solution containing methyl acetate and other solvent(s), and in light of adjusting the proportion X in the PVA resin, the mixed solution containing methyl acetate and other solvent(s) is preferably used. The mixed solution is preferably a methyl acetate/ methanol mixed solution, wherein a mass ratio of methyl acetate/ methanol is preferably 9/1 to 7/3. In addition, the temperature in the washing is preferably 45 to 55 °C, and the number of times of the washing is preferably once to three times.

Moreover, the drying temperature of the PVA resin after washing is preferably 65 to 130 °C, and the drying time period is preferably 3 to 12 hrs.

In the seed coating material, the PVA is preferably 2 to 10% by mass based on the total mass of the seed coating material. Further, in the seed coating material, the content of the PVA in the solid content may be, for example, 30% by mass or more and 90% by mass or less, or may be 40% by mass or more and 60% by mass or less.

In one embodiment, the seed coating material preferably comprises inorganic fine particles. The average particle diameter (D50) of the inorganic fine particles may be, for example, 0.1 $\mu$m or more and 500 $\mu$m or less, may be 0.5 $\mu$m or more and 200 $\mu$m or less, or may be 1 $\mu$m or more and 100 $\mu$m or less. The inorganic fine particles are preferably at least one selected from the group consisting of talc, mica, diatomaceous earth, limestone, gypsum, bentonite, vermiculite, zeolite, silica sand, and barium sulfate, more preferably talc and/or mica, and still more preferably talc.

In the seed coating material, the mass ratio of the inorganic fine particles to the PVA is preferably 0.5:1.0 to 5.0:1.0, more preferably 0.6:1.0 to 3.0:1.0, and still more preferably 0.7:1.0 to 1.0:1.0.

The seed coating material may further comprise a pesticide. Here, the pesticide means an agent that prevents or reduces damage to seeds from organisms, and is preferably at least one selected from the group consisting of an insecticide, an antimicrobial agent, and an antinematode agent.

In one embodiment, the pesticide is preferably a hydrophobic pesticide. Here, the hydrophobic pesticide is one that is not soluble in water by itself, or cannot be stably dispersed in water (for example, without a surfactant).

The hydrophobic pesticide is not particularly limited and may be, in general, a commercially available hydrophobic pesticide, and is preferably at least one selected from the group consisting of pyraclostrobin, fluxapyroxad, ipconazole, trifloxystrobin, metalaxyl, fludioxonil, thiabendazole, triticonazole, imidacloprid, and tefluthrin.

The insecticide is preferably at least one selected from the group consisting of clothianidin, tefluthrin, terbufos, cypermethrin, thiodicarb, lindane, furathiocarb, and acephate.

In one embodiment, the seed coating material may be a solution containing a solvent. The solvent is preferably water, and water may be ion-exchanged water. The seed coating material may be a solid. Particularly, the seed coating material in a state of coating the surface of a seed (the seed coating material provided on the coated seed) is usually solid.

In one embodiment, in the case in which the seed coating material is a solution, the solid content concentration thereof is not particularly limited, and the solid content concentration is preferably 30 to 50% by mass, based on the total mass of the seed coating material. Moreover, for example, such a seed coating material having the solid content concentration of 30 to 50% by mass may be diluted to an arbitrary suitable concentration with a medium such as, e.g., water when used. The solid content concentration of the seed coating material at the time of use may be, for example, 1 to 10% by mass.

In one embodiment, depending on the PVA and other optional raw material(s), the seed coating material may be in the form of, for example, a solution, a dispersion, an emulsion, a suspension, or the like. For example, some of the components comprised in the seed coating material may be in solution, whereas other component(s) may be dispersed, emulsifies, and/or suspended. In such an embodiment, it is preferred that the components of the seed coating material are substantially uniformly distributed before application to the seed, and therefore, the seed coating material is preferably a stable solution, emulsion and/or dispersion, or a solution, emulsion, dispersion and/or suspension, in which the components can be easily uniformly distributed by conventional means such as stirring, with or without gentle heating.

In one embodiment, the seed coating material may be blended with other polymer(s) compatible with PVA, such as polyvinylpyrrolidone, starch, and high molecular weight polyethylene glycol, to enhance coating performance. In the embodiment described above, at least one selected from the group consisting of a plasticizer, the inorganic fine particles, a pigment, and a detackifier may be optionally added to the seed coating material in the form of a solution, dispersion, emulsion, or suspension. Furthermore, a polyhydric alcohol such as trimethylolpropane, glycerin, or propylene glycol may be added to enhance the adhesiveness of the PVA to the seed surface.

The method for coating the seed with the seed coating material is not particularly limited and, for example, the seed and the seed coating material may be mixed, or the seed coating material may be sprayed onto the seed. The coating method may be of batchwise process or coating by continuous process. A coating machine may be used for the coating, and examples of the coating machine include a rotary coater, a drum coater, and a drying pan type granulator. Drying may be performed after or simultaneously with coating the seed with the seed coating material in a liquid form.

Coated Seed

One embodiment of the present invention is a coated seed, wherein at least a part of the surface of the seed is coated with the seed coating material described above. Due to the coating of the seed with the seed coating material of the present invention, a seed with superior germination rate can be obtained. One preferred embodiment is a coated seed coated with the seed coating material containing a pesticide, and such a coated seed is accompanied by less peeling of the pesticide from the seed and has a more superior germination rate. The coating percentage of the coated seed is preferably 80% or more, and more preferably 90% or more. It s to be noted that coating percentage may be measured by a method described in Examples later.

Examples of the seed include wheat, barley, rye, oats, rice, sorghum, apples, pears, plums, peaches, almonds, cherries, strawberries, raspberries, blackberries, sugar beet, fodder beet, beans, lentils, peas, soybeans, rape, mustard, poppy, olives, sunflowers, coconut, castor oil plants, cocoa beans, marrows, cucumbers, melons, cotton, flax, hemp, jute, oranges, lemons, grapefruit, mandarins, spinach, lettuce, asparagus, cabbages, carrots, onions, tomatoes, potatoes, paprika, avocados, flowers, shrubs, broad-leaved trees, conifers, tomatoes, peppers, potatoes, onions, bulbs, rice, sorghum, maize, tobacco, nuts, coffee, sugar cane, and the like, and at least one selected from the group consisting of maize, wheat, and soybean is preferred.

EXAMPLES

Hereinafter, the present invention will be described in more detail by way of Examples, but the present invention is not in any way limited by these Examples. It is to be noted that the amount of generated dust, biodegradability, coatability, and the like in Examples were each measured by the following method.

Viscosity-Average Degree of Polymerization

The viscosity-average degree of polymerization of PVA-1 to PVA-4 was measured in accordance with JIS K6726: 1994. Specifically, PVA-1 to PVA-4 were saponified until the degree of saponification reached 99.5 mol% or more, and each limiting viscosity [η] (liter/g) of the PVA-1 to PVA-4 after the saponification, which was measured in water at 30 °C, was used to determine the viscosity-average degree of polymerization by the following equation.

$$\text{Viscosity-average degree of polymerization} = ([\eta] \times 10^4 / 8.29)^{(1/0.62)}$$

Degree of Saponification

The degree of saponification (mol%) of PVA-1 to PVA-4 was each measured in accordance with JIS K6726: 1994.

Proportion X of Total Content of Methanol-Soluble Content and Sodium Acetate

10 g of each of PVA-1 to PVA-4 (PVA resins) obtained in each Production Example was weighed into a cylindrical filter paper and washed for 8 hrs by using a Soxhlet extractor with methanol as the washing solvent. The amount of methanol was set to 100 mL with respect to 10 g of the PVA resin. Further, the washing by using the Soxhlet extractor was carried out in a hot water bath at about 95 °C. The washing liquid after the washing treatment was collected, methanol was dried to remove from the washing liquid thus obtained, and the proportion X of the total content of the methanol-soluble content of the PVA and sodium acetate with respect to the total content of the PVA and sodium acetate was calculated according to the following equation using the mass of the resultant residue.

$$X \text{ (\% by mass)} = ([\text{the mass of residues (g)}]/ [10 \text{ (g)}]) \times 100$$

Proportion Y of Methanol-Soluble Content in PVA

The proportion Y (% by mass) of the methanol-soluble content in the PVA was calculated according to the following equation from the mass of the residue, and the mass of sodium acetate comprised in PVA1 to PVA4, which were obtained by the measurement of the proportion X described above.

Y (% by mass) = ([mass of the residue (g) - mass of sodium acetate (g)]/ [10 (g) - mass of sodium acetate (g)]) $\times$ 100

Amount of Generated Dust

After 100 g of coated seeds was charged into a 300 mL wide-mouth plastic bottle, the bottle was capped and set on a small ball mill rotary stand (AV-1, Asahi Rika Seisakusho Co., Ltd.), and rotated at 80 rpm for 15 min. The coated seeds after the treatment were sieved through a metal sieve to remove fine powder, and then the mass of the coated seeds after removing the fine powder was measured using a precision balance. The mass reduction amount after the removal of fine powder compared to the amount before the removal was defined as the amount of generated dust and evaluated by A to C as follows.

A: the amount of generated dust being less than 10 mg,
B: the amount of generated dust being 10 mg or more and less than 20 mg,
C: the amount of generated dust being 20 mg or more

Biodegradability of Resin Component

The resin component Em-1 used for PVA-1 to PVA-4 and Comparative Examples 4 to 6 was evaluated for biodegradability in accordance with ISO14851 (BOD measurement using activated sludge), in water within 28 days to assess as: A when 60% or more was degraded; and B when less than 60% degraded.

Coatability

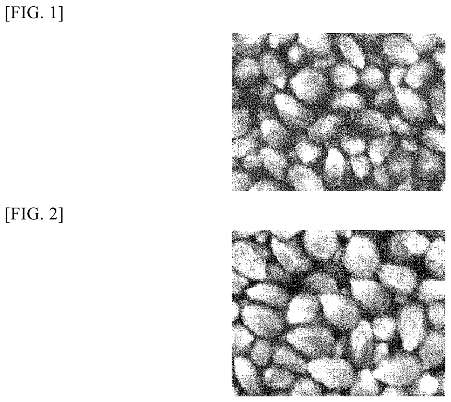

The coating percentage of the coated seeds was calculated by the following procedure using the image analysis software ImageJ, and the coatability was evaluated from the coating percentage to assess as: A 90% or more; B less than 90% and 80% or more; and C less than 80%. A photograph used for image processing for the coated seeds of Example 2 is shown in FIG. 1, and a photograph used for image processing for the coated seeds of Comparative Example 3 is shown in FIG. 2.

1. The photograph of the coated seeds was loaded into ImageJ.
2. The uncoated site region was selected using Color Threshold. Saturation was set to 0 to 255 and Brightness was set to 0 to 255, and the Hue range was adjusted to 0 to an arbitrary value to make the uncoated site appear selected in red.
3. The red component was separated using Split Channels.
4. The area other than the white part was selected in the resulting "red", using Threshold. The selection range was set to 0 to 254.
5. The value of % Area in Measure was used as the coating percentage for evaluation.

Production Example 1

Into a 3 L reaction chamber equipped with a stirrer, a nitrogen feed port, an additive addition port, and an initiator addition port were charged 720 g of vinyl acetate and 880 g of methanol, and after the temperature was raised to 60 °C, replacement with nitrogen gas in the system was carried out by nitrogen bubbling for 30 min. The inner temperature of the reaction chamber was adjusted to 60 °C, and polymerization was started by adding 1.2 g of 2,2'-azobis(4-methoxy-2,4-dimethylvaleronitrile). During the polymerization, the polymerization temperature of 60 °C was maintained, and after 5 hours when the degree of polymerization reached 70%, the polymerization was stopped by cooling. Next, unreacted vinyl acetate was eliminated under reduced pressure to give a solution of polyvinyl acetate in methanol. Saponification was performed by adding a solution of NaOH in methanol (10% by mass concentration) to a solution of polyvinyl acetate in methanol adjusted to 30%, such that an alkali molar ratio (the number of moles of NaOH/ the number of moles of the vinyl ester unit in polyvinyl acetate) became 0.0037. Thus resulting gel was washed with 2 L of a methyl acetate/ methanol mixed solution (mass ratio: 8/2) at 50 °C. After the washing was conducted two times in total, drying at 70 °C for 12 hrs gave PVA-1 as a PVA resin comprising a vinyl alcohol polymer and sodium acetate (a PVA resin substantially consisting of only a vinyl alcohol polymer and sodium acetate). The degree of saponification and the viscosity-average degree of polymerization of PVA-1 thus obtained, the proportion Y of the methanol-soluble content in PVA in PVA-1, and the proportion X of the total content of the methanol-soluble content and sodium acetate with respect to the total content of the PVA and sodium acetate are shown in Table 1.

Production Example 2

Into a 3 L reaction chamber equipped with a stirrer, a nitrogen feed port, an additive addition port, and an initiator addition port were charged 720 g of vinyl acetate and 880 g of methanol, and after the temperature was raised to 60 °C, replacement with nitrogen gas in the system was carried out by nitrogen bubbling for 30 min. The inner temperature of the reaction chamber was adjusted to 60 °C, and polymerization was started by adding 1.2 g of 2,2'-azobis(4-methoxy-2,4-dimethylvaleronitrile). During the polymerization, the polymerization temperature of 60 °C was maintained, and after 5 hours when the degree of polymerization reached 70%, the polymerization was stopped by cooling. Next, unreacted vinyl acetate was eliminated under reduced pressure to give a solution of polyvinyl acetate in methanol. Saponification was performed by adding a solution of NaOH in methanol (10% by mass concentration) to a solution of polyvinyl acetate in methanol adjusted to 30%, such that an alkali molar ratio (the number of moles of NaOH/ the number of moles of the vinyl ester unit in polyvinyl acetate) became 0.0073. Thus resulting gel was washed with 2 L of methanol at 50 °C. After the washing was conducted two times in total, drying at 70 °C for 12 hrs gave PVA-2 as a PVA resin comprising a vinyl alcohol polymer and sodium acetate (a PVA resin substantially consisting of only a vinyl alcohol polymer and sodium acetate). The degree of saponification and the viscosity-average degree of polymerization of PVA-2 thus obtained, the proportion Y of the methanol-soluble content in PVA in PVA-2, and the proportion X of the total content of the methanol-soluble content and sodium acetate with respect to the total content of the PVA and sodium acetate are shown in Table 1.

Production Example 3

Into a 3 L reaction chamber equipped with a stirrer, a nitrogen feed port, an additive addition port, and an initiator addition port were charged 720 g of vinyl acetate and 880 g of methanol, and after the temperature was raised to 60 °C, replacement with nitrogen gas in the system was carried out by nitrogen bubbling for 30 min. The inner temperature of the reaction chamber was adjusted to 60 °C, and polymerization was started by adding 1.2 g of 2,2'-azobis(4-methoxy-2,4-dimethylvaleronitrile). During the polymerization, the polymerization temperature of 60 °C was maintained, and after 5 hours when the degree of polymerization reached 70%, the polymerization was stopped by cooling. Next, unreacted vinyl acetate was eliminated under reduced pressure to give a solution of polyvinyl acetate in methanol. Saponification was performed by adding a solution of NaOH in methanol (10% by mass concentration) to a solution of polyvinyl acetate in methanol adjusted to 30%, such that an alkali molar ratio (the number of moles of NaOH/ the number of moles of the vinyl ester unit in polyvinyl acetate) became 0.03. Thus resulting gel was washed with 2 L of methanol at 50 °C. After the washing was conducted two times in total, drying at 70 °C for 12 hrs gave PVA-3 as a PVA resin comprising a vinyl alcohol polymer and sodium acetate (a PVA resin substantially consisting of only a vinyl alcohol polymer and sodium acetate). The degree of saponification and the viscosity-average degree of polymerization of PVA-3 thus obtained, the proportion Y of the methanol-soluble content in PVA in PVA-3, and the proportion X of the total content of the methanol-soluble content and sodium acetate with respect to the total content of the PVA and sodium acetate are shown in Table 1.

Production Example 4

Into a 3 L reaction chamber equipped with a stirrer, a nitrogen feed port, an additive addition port, and an initiator addition port were charged 1,280 g of vinyl acetate and 320 g of methanol, and after the temperature was raised to 60 °C, replacement with nitrogen gas in the system was carried out by nitrogen bubbling for 30 min. The inner temperature of the reaction chamber was adjusted to 60 °C, and polymerization was started by adding 1.2 g of 2,2'-azobis(4-methoxy-2,4-dimethylvaleronitrile). During the polymerization, the polymerization temperature of 60 °C was maintained, and after 5 hours when the degree of polymerization reached 60%, the polymerization was stopped by cooling. Next, unreacted vinyl acetate was eliminated under reduced pressure to give a solution of polyvinyl acetate in methanol. Saponification was performed by adding a solution of NaOH in methanol (10% by mass concentration) to a solution of polyvinyl acetate in methanol adjusted to 30%, such that an alkali molar ratio (the number of moles of NaOH/ the number of moles of the vinyl ester unit in polyvinyl acetate) became 0.0073. Thus resulting gel was washed with 2 L of methanol at 50 °C. After the washing was conducted two times in total, drying at 70 °C for 12 hrs gave PVA-4 as a PVA resin comprising a vinyl alcohol polymer and sodium acetate (a PVA resin substantially consisting of only a vinyl alcohol polymer and sodium acetate). The degree of saponification and the viscosity-average degree of polymerization of PVA-4 thus obtained, the proportion Y of the methanol-soluble content in PVA in PVA-4, and the proportion X of the total content of the methanol-soluble content and sodium acetate with respect to the total content of the PVA and sodium acetate are shown in Table 1.

Example 1

A seed coating material was produced in accordance with a method described below by using PVA-1 as a resin component and mica (MICA C-4000, manufactured by IMERYS S.A.) as inorganic fine particles to give Coat-1. It s to be noted that in Coat-1, the proportion X of the total content of the methanol-soluble content and sodium acetate with respect to the total content of the PVA and sodium acetate is the same as the proportion X in the PVA-1.

Production of seed coating material

A pigment dispersion liquid was prepared by mixing 10 g of inorganic fine particles, 2.9 g of phthalocyanine blue (manufactured by FUJIFILM Wako Pure Chemical Corporation) as a pigment, and 18.6 g deionized water until homogeneous. Next, 19.7 g of a 8% by mass aqueous solution of the resin component, 4.46 g of the pigment dispersion liquid, and 20.84 g of water were mixed until homogeneous, and the obtained mixture was used as a seed coating material.

Coating to seeds

Coating was performed by using a drying pan type granulator (DPZ-01R, AS ONE Corporation) in which 8 mL of the seed coating material was added to 200 g of maize seeds (Pop type, Butterfly shape). The coating was performed with an angle of 30 degrees at a temperature of 35 to 40 °C and a rotation frequency of 20 rpm for a drying time period of 40 min to give coated seeds.

Example 2

A seed coating material Coat-2 was obtained in a similar manner to Example 1 except that talc (manufactured by FUJIFILM Wako Pure Chemical Corporation) was used as the inorganic fine particles. It s to be noted that in Coat-2, the proportion X of the total content of the methanol-soluble content and sodium acetate with respect to the total content of the PVA and sodium acetate is the same as the proportion X in the PVA-1.

Comparative Example 1

A seed coating material Coat-3 was obtained in a similar manner to Example 1 except that PVA-2 as the resin component, and talc (manufactured by FUJIFILM Wako Pure Chemical Corporation) as the inorganic fine particles were used. It s to be noted that in Coat-3, the proportion X of the total content of the methanol-soluble content and sodium acetate with respect to the total content of the PVA and sodium acetate is the same as the proportion X in the PVA- 2.

Comparative Example 2

A seed coating material Coat-4 was obtained in a similar manner to Example 1 except that PVA-3 as the resin component, and talc (manufactured by FUJIFILM Wako Pure Chemical Corporation) as the inorganic fine particles were used. It s to be noted that in Coat-4, the proportion X of the total content of the methanol-soluble content and sodium acetate with respect to the total content of the PVA and sodium acetate is the same as the proportion X in the PVA- 3.

Comparative Example 3

A seed coating material Coat-5 was obtained in a similar manner to Example 1 except that PVA-4 as the resin component, and talc (manufactured by FUJIFILM Wako Pure Chemical Corporation) as the inorganic fine particles were used. It s to be noted that in Coat-5, the proportion X of the total content of the methanol-soluble content and sodium acetate with respect to the total content of the PVA and sodium acetate is the same as the proportion X in the PVA- 4.

Comparative Example 4

A seed coating material produced in a similar manner to Example 1 except that: Em-1 as the resin component, and mica (MICA C-4000, manufactured by IMERYS S.A.) as the inorganic fine particles were used; 3.3 g of polyethylene wax (trade name "Liquitron 461", manufactured by Lubrizol Corporation) was added as a further additive; and the amount of deionized water used was changed to 17.54 g was defined as Coat-6. It s to be noted that Em-1 is a resin component having the same formulation to that of Latex carrier shown in Table 1 of Patent Document 1 (PCT International Publication No. 2013/166020).

Comparative Example 5

A seed coating material Coat-7 was obtained in a similar manner to Example 1 except that Em-1 was used as the resin component.

Comparative Example 6

A seed coating material Coat-8 was obtained in a similar manner to Comparative Example 4 except that talc (manufactured by FUJIFILM Wako Pure Chemical Corporation) was used as the inorganic fine particles.

Table 1

|  | PVA resin | | | |
|  | Viscosity average degree of polymerization | Degree of saponification (mol%) | Proportion X (% by mass) | Proportion Y (% by mass) |
|---|---|---|---|---|
| PVA-1 | 500 | 74 | 7.9 | 7.1 |
| PVA-2 | 500 | 88 | 1.3 | 0.4 |
| PVA-3 | 500 | 98 | 1.0 | 0.0 |
| PVA-4 | 1700 | 88 | 0.6 | 0.0 |

Table 2

|  |  | Resin component | Inorganic fine particles | Proportion X (% by mass) | Biodegradability | Amount of generated dust (mg/100 g) | Coatability |
|---|---|---|---|---|---|---|---|
| Example 1 | Coat-1 | PVA-1 | Mica | 7.9 | A | B | B |
| Example 2 | Coat-2 | PVA-1 | Talc | 7.9 | A | A | A |
| Comparative Example 1 | Coat-3 | PVA-2 | Talc | 1.3 | A | B | C |
| Comparative Example 2 | Coat-4 | PVA-3 | Talc | 1.0 | A | C | C |
| Comparative Example 3 | Coat-5 | PVA-4 | talc | 0.6 | A | C | C |
| Comparative Example 4 | Coat-6 | Em-1[*1] | mica | - | B | A | A |

(continued)

|  |  | Resin component | Inorganic fine particles | Proportion X (% by mass) | Biodegradability | Amount of generated dust (mg/100 g) | Coatability |
|---|---|---|---|---|---|---|---|
| Comparative Example 5 | Coat-7 | Em-1 | mica | - | B | A | C |
| Comparative Example 6 | Coat-8 | Em-1*1 | talc | - | B | A | A |

Amount of generated fine powder
A: less than 10 mg;
B: 10 mg or more and less than 20 mg;
C: 20 mg or more
Biodegradability of resin component: ISO 14851, within 28 days (in water)
A: 60% or more degraded;
B: less than 60% degraded
Coatability
A: coating percentage being 90% or more;
B: coating percentage being less than 90% and 80% or more;
C: coating percentage being less than 80%
*1: 3.5% polyethylene wax was added
Composition of seed coating material:
solid content concentration = 7.5 mass%; resin component = 3.5 mass%; inorganic fine particle = 3.1 mass%; pigment (phthalocyanine blue) = 0.9 mass%

In regard to Examples 1 and 2 and Comparative Examples 1 to 6, the results of the amount of generated dust, biodegradability, and coatability are summarized in Table 2. The seed coating materials of Examples 1 and 2 were seed coating materials that satisfy all of a small amount of generated dust, biodegradability, and favorable coatability. The seed coating materials of Comparative Examples 1 to 3 all had the proportion X of the total content of the methanol-soluble content and sodium acetate with respect to the total content of PVA and sodium acetate being less than 2% by mass, resulting in a large amount of generated dust, and/or inferior coatability. In FIG. 1, which is a photograph of the coated seeds of Example 2, and FIG. 2, which is a photograph of the coated seeds of Comparative Example 3, the darker colored portion is the coated portion, and thus it is revealed that the coated seeds of Example 2 had a greater area of the coated portion in comparison with Comparative Example 3. Furthermore, the seed coating materials of Comparative Examples 4 to 6 not comprising the PVA resulted in inferior biodegradability.

**Claims**

1.   A seed coating material comprising:

a vinyl alcohol polymer; and
optionally sodium acetate, wherein

a proportion of a total content of a methanol-soluble content of the vinyl alcohol polymer and the sodium acetate, with respect to a total content of the vinyl alcohol polymer and the sodium acetate, is 2% by mass or more and 20% by mass or less.

2.   The seed coating material according to claim 1, wherein in the vinyl alcohol polymer, a proportion of the methanol-soluble content of the vinyl alcohol polymer is 4% by mass or more and 10% by mass or less.

3.   The seed coating material according to claim 1, wherein a degree of saponification of the vinyl alcohol polymer is 70.0 mol% or more and 86.0 mol% or less.

4. The seed coating material according to claim 1, further comprising inorganic fine particles.

5. The seed coating material according to claim 4, wherein the inorganic fine particles are at least one selected from the group consisting of talc, mica, diatomaceous earth, limestone, gypsum, bentonite, vermiculite, zeolite, silica sand, and barium sulfate.

6. The seed coating material according to claim 5 comprising talc as the inorganic fine particles.

7. The seed coating material according to claim 4, wherein a mass ratio of the inorganic fine particles to the vinyl alcohol polymer is 0.5:1.0 to 5.0:1.0.

8. A coated seed, wherein at least a part of a surface of the seed is coated with the seed coating material according to any one of claims 1 to 7.

9. The coated seed according to claim 8, wherein the seed is at least one selected from the group consisting of maize, wheat, and soybean.

[FIG. 1]

[FIG. 2]

## INTERNATIONAL SEARCH REPORT

| International application No. |
| --- |
| **PCT/JP2024/022817** |

| | |
| --- | --- |
| **A.** | **CLASSIFICATION OF SUBJECT MATTER** |

*A01N 25/00*(2006.01)i; *A01C 1/06*(2006.01)i; *A01N 25/10*(2006.01)i; *C08F 8/12*(2006.01)i; *C08F 16/06*(2006.01)i
FI: A01N25/00 101; C08F8/12; C08F16/06; A01C1/06 Z; A01N25/10

According to International Patent Classification (IPC) or to both national classification and IPC

| | |
| --- | --- |
| **B.** | **FIELDS SEARCHED** |

Minimum documentation searched (classification system followed by classification symbols)

A01N25/00; A01C1/06; A01N25/10; C08F8/12; C08F16/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | JP 10-225206 A (TAKII SHUBYO KK) 25 August 1998 (1998-08-25)<br>paragraph [0030], examples 2, 3 | 1-9 |
| Y | WO 2022/034906 A1 (KURARAY CO., LTD.) 17 February 2022 (2022-02-17)<br>paragraphs [0317]-[0320] | 1-9 |
| Y | JP 5995340 B1 (SUMIKA AGROTECH CO., LTD.) 21 September 2016 (2016-09-21)<br>paragraph [0042], example 14 | 9 |
| A | | 1-8 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/022817**

| Patent document cited in search report | | | Publication date (day/month/year) | Patent family member(s) | | | Publication date (day/month/year) |
|---|---|---|---|---|---|---|---|
| JP | 10-225206 | A | 25 August 1998 | US | 5918413 | A | |
| | | | | column 4, lines 22-24, examples 2, 3 | | | |
| | | | | EP | 963689 | A1 | |
| WO | 2022/034906 | A1 | 17 February 2022 | US | 2023/0340172 | A1 | |
| | | | | paragraphs [0487]-[0499] | | | |
| | | | | CN | 116034150 | A | |
| | | | | TW | 202219076 | A | |
| JP | 5995340 | B1 | 21 September 2016 | CN | 108471708 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013166020 A

- WO 2019176272 A